# FASCICULE DE BREVET EUROPEEN

(11) **EP 2 109 232 B1**
(45) Date de publication et mention de la délivrance du brevet: **23.02.2011**
(21) Numéro de dépôt: 09157532.4
(22) Date de dépôt: 07.04.2009
(51) Int. Cl.: H04B 7/185, B64G 1/24

(54) **Satellite agile à antennes de transmission réparties.**
Beweglicher Satellit mit verteilten Übertragungsantennen
Agile satellite with distributed transmission antennas

(30) Priorité: 07.04.2008 FR 0852304
(43) Date de publication de la demande: 14.10.2009
(73) Titulaire: Centre National d'Etudes Spatiales, 75001 Paris (FR)
(72) Inventeur: Peragin, Eric, 31520 Ramonville (FR)
(74) Mandataire: Jacobson, Claude

(56) Documents cités:
- EP-A- 0 792 800
- EP-A- 1 110 862
- FR-A- 2 688 605
- GB-A- 2 432 486

## Description

L'invention se rapporte à un satellite agile de petite taille destiné à des missions d'observation de zones d'observation dans lesquelles des données d'observation sont rapatriées au sol par des moyens de rapatriement et à un procédé de mise en oeuvre du rapatriement des données.

L'utilisation de satellite agile permettant d'observer des zones d'observation situées à la surface du globe terrestre au gré de l'opérateur du satellite est classique.

Grâce à la faculté de modifier la trajectoire du satellite mais également la faculté de modifier l'attitude du satellite par rapport à son axe Nadir, l'axe Nadir étant défini comme l'axe joignant le centre de la Terre et le centre de gravité du satellite, et étant supposé que globalement une face dite Terre du satellite est dirigée vers la Terre, il est possible de viser une zone d'observation choisie pour satisfaire les exigences de focalisation du capteur d'observation, notamment les exigences d'une caméra optique ou infrarouge, ou encore d'un récepteur radiofréquence.

Il est connu que le volume de données d'observation encore appelé données de télémesure est important, pouvant atteindre jusqu'à plusieurs dizaines de gigabits et qu'il est nécessaire alors de disposer d'une puissance rayonnée suffisante en direction d'une ou plusieurs stations situées au sol et dédiées à la récupération des données de télémesure, de pouvoir pointer les antennes de communication en émission du satellite avec une bonne directivité vers lesdites stations sol.

Les satellites agiles de grande taille sont en général pourvus de systèmes de pointage complexes réalisés sous la forme d'antennes à balayage électronique dite antennes actives ou bien encore d'un ensemble composé d'une unité de commande et d'un actionneur permettant de déplacer mécaniquement l'antenne par rapport à la structure porteuse du satellite appelée plateforme.

Les satellites agiles de petite taille appelés microsatellites, typiquement n'excédant pas un gabarit de 0,6 m x 0,6 m x 0,6m, ne peuvent pas supporter l'implantation d'un dispositif de pointage en raison de leur encombrement et de leur consommation, mais également en raison de leur complexité et de leur coût.

Il est alors souvent nécessaire au cours d'une mission d'observation exécutée par un satellite agile de petite taille de faire succéder dans le temps, une étape de collecte de données de télémesure par le capteur d'observation et une étape de rapatriement des données de télémesure, chaque étape étant associée à une attitude propre du satellite, c'est-à-dire une orientation du satellite par rapport à un repère inertiel lié au centre de gravité du satellite et à sa trajectoire par rapport à un repère fixe galiléen lié au centre de la Terre.

La succession des deux étapes a pour inconvénient majeur d'interrompre la phase d'observation dans le temps et de priver l'utilisateur d'une observation permanente dans laquelle l'observation et le rapatriement des données sont effectués en même temps.

Un autre inconvénient est la dépense d'énergie, en général de carburant, requise pour modifier les attitudes du satellite.

Voir GB-A-2 432 486 (Deutsches Zentrum für luft und Raumfahrt).

Le probleme technique est donc de trouver des moyens simples permettant à un satellite agile de petite taille d'observer et retransmettre des données de télémesure en même temps sans avoir besoin de changer l'attitude de la plateforme.

A cette fin, l'invention a pour objet un satellite agile comprenant une plateforme formée d'un panneau de face Terre et d'un ensemble de panneaux de mur disposés adjacents autour d'un bord circonférentiel du premier panneau, un système de contrôle d'orbite et d'attitude du satellite apte à commander au moins un paramètre de position et d'attitude pris dans l'ensemble des paramètres de position orbitale par rapport à un repère fixe galiléen lié à la Terre et d'attitude du satellite par rapport à un repère inertiel de référence du satellite, un capteur d'observation apte à fournir des données de télémesure et une mémoire de stockage de données raccordée au capteur d'observation et un émetteur de rapatriement de données connecté à la mémoire, caractérisé en ce qu'il comprend au moins deux antennes de transmission disposées sur un ou au moins deux panneaux parmi le panneau Terre et les panneaux de mur, chaque antenne de transmission de données ayant un diagramme de rayonnement respectif fixe par rapport à la plateforme, et un moyen de sélection d'antenne raccordé en entrée à l'émetteur de rapatriement des données et en sorties à la ou chaque antenne de transmission, le moyen de sélection étant apte à connecter de manière sélective l'entrée à une sortie prise parmi les au moins deux sorties connectées et en ce que la sélection dépend de l'au moins un paramètre de position et d'attitude.

Suivant des modes particuliers de réalisation, le satellite agile comporte l'une ou plusieurs des caractéristiques suivantes :
- la sélection dépend seulement d'au moins un paramètre d'attitude du satellite ;
- la sélection dépend d'au moins un angle pris parmi l'angle d'inclinaison et l'angle d'azimut ;
- le système de contrôle d'orbite et d'attitude est apte à commander un premier et un deuxième paramètres d'attitude, le premier paramètre d'attitude est un angle d'inclinaison par rapport à un premier axe inertiel de référence du satellite passant par le centre de gravité du satellite, le deuxième paramètre d'attitude est un angle d'azimut de rotation autour du premier axe inertiel par rapport à un deuxième axe inertiel de référence azimutal prédéterminé orthogonal au premier axe, en ce que la sélection dépend d'au moins un angle pris parmi l'angle d'inclinaison et l'angle d'azimut ;
- le satellite comprend un récepteur de télécommandes d'exploitation du satellite émis depuis le sol, et les paramètres de commande du système de contrôle d'orbite et d'attitude dépendent des ordres reçus ;
- le satellite comprend une mémoire de programmes autonomes de paramètres de commande aptes à stocker une séquence de paramètres de commande du système de contrôle d'orbite et d'attitude et à être lus par une unité d'exploitation du satellite ;
- chaque panneau compris parmi le panneau de face Terre et les panneaux de mur comporte une antenne de transmission ;
- l'angle de couverture stérique global des antennes de transmission prises dans leur ensemble est sensiblement égal à 2π stéradian ce qui correspond à la demi-sphère dont l'axe central de symétrie est un axe passant par le centre de gravité du satellite et normal au premier panneau ;
- l'angle de couverture stérique de l'une quelconque des antennes de transmission est au moins égal à 2π stéradians divisé par le nombre total d'antennes de transmission ;
- l'angle de couverture planaire d'une quelconque des antennes de transmission associées respectivement aux panneaux de murs dans le plan d'extension du panneau de face Terre est au moins égal à 2π radians divisé par le nombre total d'antennes de mur ;
- les antennes de transmission sont d'un type compris parmi les antennes à cornet, les antennes patch, passives, diélectriques et les antennes à hélice ;
- le moyen de sélection comprend un moyen de connexion-déconnexion RF et un moyen de commande du moyen de connexion-déconnexion, le moyen de connexion-déconnexion RF comportant des amplificateurs radiofréquence dont la sortie RF respective est raccordée à l'antenne de transmission respective, chaque entrée RF d'amplificateur étant connectée à une entrée du moyen de sélection au travers d'un diviseur de basse puissance RF ou d'un commutateur électronique RF de basse puissance, chaque amplificateur ayant une entrée de commande de l'état RF passant ou non passant de l'amplificateur ;
- chaque amplificateur comporte un système de polarisation intégré et le moyen de commande est apte à mettre en circuit l'alimentation d'un amplificateur sélectionné et à mettre hors circuit les alimentations des amplificateurs restants non sélectionnés ; et
- la bande de fréquence d'émission de l'ensemble des antennes de transmission est comprise dans l'ensemble des bandes X, Ku et Ka.

L'invention a également pour objet un procédé de rapatriement de données d'observation d'un satellite agile défini ci-dessus, caractérisé en ce que pendant l'établissement d'un positionnement et d'une attitude de la plateforme correspondant à une visée du capteur d'observation sur une zone donnée de la surface du globe terrestre, un emplacement d'une station étant connue, l'antenne de transmission destinée à transmettre le flux de données généré est sélectionnée de telle sorte que son diagramme de rayonnement couvre la station sol.

Suivant des modes particuliers de réalisation, le procédé comporte la caractéristique suivante :
- une seule antenne de transmission est sélectionnée à la fois.

L'invention sera mieux comprise à la lecture de la description d'une forme de réalisation qui va suivre donnée uniquement à titre d'exemple et faite en se référant aux dessins sur lesquels :
- la figure 1 est une vue schématique en perspective d'un satellite agile selon l'invention,
- la figure 2 est une vue en coupe selon la direction II-II du satellite agile de la figure 1,
- la figure 3 est une vue en coupe selon la direction III-III du satellite agile de la figure 1,
- la figure 4 est une vue détaillée d'un moyen de sélection du satellite agile représenté à la figure 3,
- la figure 5 est une vue de dessus d'un satellite agile de la figure 1 en orbite selon un axe Nadir et des couvertures au sol des antennes de transmission du satellite,

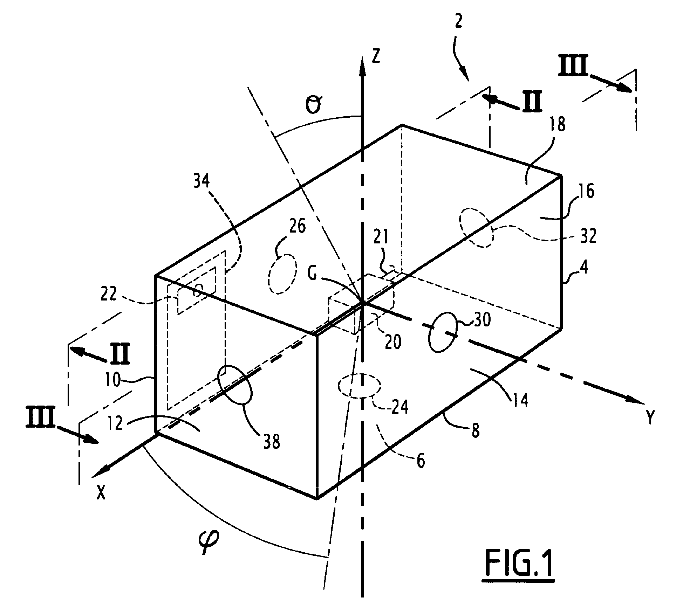

Comme illustré sur la figure 1, un satellite agile 2 comprend une plateforme 4 formée par un ensemble de panneaux assemblés et supportés par une structure porteuse non représentée sur la figure 1.

Un premier panneau 6 de référence, dit panneau de Terre, destiné à être pointé directement vers la Terre pendant son survol, est bordé sur un contour 8 circonférentiel, ici carré, par quatre panneaux 10, 12, 14, 16 dits de mur disposés et fixés adjacents sur le contour 8 selon une direction normale au plan d'extension du premier panneau 6.

Un sixième panneau 18 de ciel est posé et fixé sur les bords des quatre panneaux 10, 12, 14, 16 opposés aux bords fixés au contour 8, de façon à fermer la plateforme 4 qui présente alors une forme de parallélépipède.

La plateforme 4 comprend un système de contrôle d'orbite et d'attitude de satellite 20 (SCAO en français et AOCS en anglais) apte à déterminer le positionnement, respectivement l'attitude, actuels du satellite 2 dans un repère fixe par rapport au centre de la Terre, respectivement inertiel lié au satellite, à partir des informations de repérage fournies par divers capteurs de positionnement, respectivement d'attitude non représentés sur la figure 1, tels qu'un senseur Terre, un senseur stellaire, un senseur gyroscopique, un senseur à base de récepteur GPS, etc.

La SCAO 20 est également apte à faire exécuter une commande de changement de position orbitale et/ou d'attitude du satellite 2 à partir d'un ordre reçu en une entrée 21, par l'envoi de commandes d'actionneurs, les actionneurs étant par exemple des générateurs calibrés d'impulsions spécifiques non représentés sur la figure 1 et/ou des roues à inertie supposées ici faisant partie de la SCAO 20.

Des paramètres de commande de l'attitude du satellite sont ici décrits sur la figure 1 par deux angles de rotation à partir d'un repère inertiel d'axes X, Y, Z prédéterminé lié au centre de gravité G du satellite 2.

Sur la figure 1, le satellite 2 est représenté dans une attitude de référence dans laquelle l'axe Z est orthogonal au premier panneau 6 dit de Terre, l'axe X est dirigé orthogonalement vers le panneau 14, et l'axe Y est tel que le trièdre (X, Y, Z) est direct.

Un premier paramètre de commande d'attitude est l'angle d'inclinaison θ définissant un degré de rotation de la plateforme 4 autour de l'axe X.

Un deuxième paramètre de commande d'attitude est l'angle d'azimut ϕ définissant un degré de rotation de la plateforme 4 autour de l'axe Z.

Les premier et deuxième paramètres tels que définis ci-dessus sont bien adaptés dans le cas de visée d'un équipement d'observation monté à bord d'un satellite, la ligne de visée étant comprise dans l'angle solide définie par le demi-espace orienté vers le sol par rapport au plan d'extension du panneau Terre 6 lorsque le satellite est en orbite.

Le satellite 2 comprend un capteur d'observation 22 de type caméra optique ou infrarouge à champ de vision limité nécessitant un pointage c'est-à-dire un basculement θ et/ou une rotation azimutale ϕ de la plateforme 2 pour voir l'ensemble de la zone terrestre visible depuis le satellite en deçà de la ligne d'horizon.

Le satellite 2 comprend, sur le premier panneau 6 et sur les quatre panneaux 10, 12, 14, 16, une antenne de transmission respective 24, 26, 28, 30, 32 destinée à rapatrier les données d'observation collectées par le capteur d'observation 22 lorsqu'au moins l'une d'entre elles se trouve en situation de couvrir une station sol de rapatriement pouvant recevoir les données de télémesure.

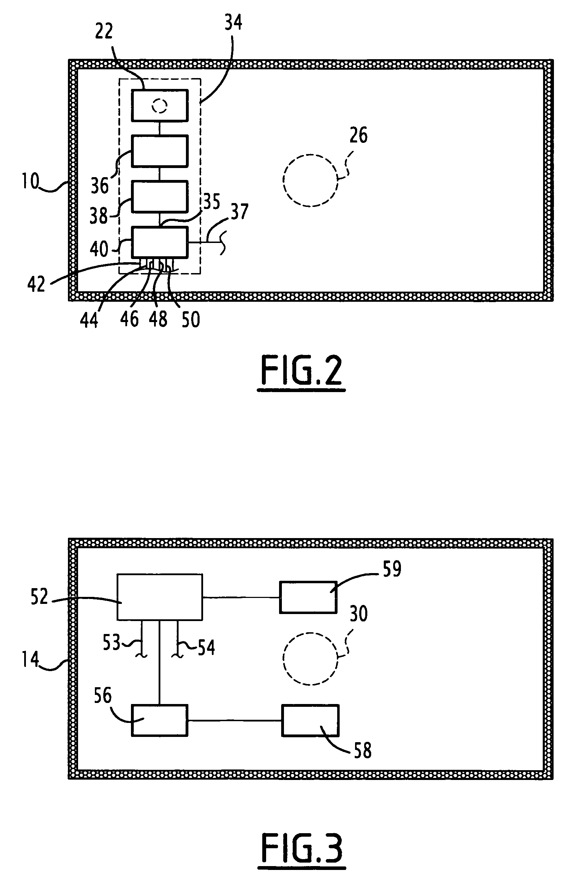

Le satellite 2 comprend, sur le panneau 10, une zone 34 contenant le capteur d'observation 22 et un ensemble d'équipements représenté de manière plus lisible sur la figure 2.

L'ensemble des équipements comprend une mémoire de masse 36 connectée au capteur d'observation 22 servant de tampon à un émetteur 38 de rapatriement des données qui lui est connecté, et un moyen de sélection d'antenne 40 raccordé en une entrée 35 à l'émetteur 38 de rapatriement des données.

Le moyen de sélection d'antenne 40 est pourvu de cinq sorties d'antenne 42, 44, 46, 48, 50, chacune des sorties étant raccordée respectivement à une antenne de transmission différente 24, 26, 28, 30, 32, et d'une entrée de commande de sélection 37.

Chaque antenne est une antenne de type patch accordée en bande X de fréquences et caractérisée par un angle propre de couverture, l'angle de couverture d'une antenne quelconque étant défini classiquement comme l'angle d'ouverture du lobe principal de l'antenne à 3 dB d'atténuation.

L'angle de couverture stérique global des antennes de transmission 24, 26, 28, 30, 32 prises dans leur ensemble est sensiblement égal à 2π stéradian, ce qui correspond à la couverture hémisphérique selon la demi-sphère dont l'axe central de symétrie est un axe passant par le centre de gravité G du satellite et normal au premier panneau 6.

L'angle de couverture stérique de l'une quelconque des antennes de transmission 24, 26, 28, 30, 32 est au moins égal à 2π stéradians divisé par le nombre total d'antennes de transmission, ici cinq antennes.

L'angle de couverture planaire d'une quelconque des antennes de transmission 26, 28, 30, 32 associées aux panneaux de murs dans le plan d'extension du panneau de face Terre 6 est au moins égal à 2π radians divisé par le nombre total d'antennes de mur, ici quatre.

L'angle de couverture planaire d'une quelconque des antennes de transmission de la plateforme coupée par un plan contenant le centre G et perpendiculaire au plan d'extension du panneau face Terre est au moins égal à π radians divisé par le nombre d'antennes coupé par le plan de coupe, ici trois. Par exemple, le plan de coupe passant par G de normale l'axe X coupe les antennes de transmission 24, 26, 30.

Sur la figure 3 sont représentés un ensemble d'équipements montés sur le panneau 14 qui comprennent une unité d'exploitation 52 de la plateforme et des charges utiles montées à bord de la plateforme 4 pourvue de deux sorties 53 et 54, un émetteur-récepteur 56 de télécommande et télémesure d'exploitation de la plateforme raccordée à une entrée une unité d'exploitation 52, une antenne de télécommande et télémesure 58 raccordée à l'émetteur-récepteur 56, et une mémoire 59 connectée à l'unité d'exploitation de la plateforme 52.

La sortie 53 est reliée à l'entrée 21 de la SCAO 20 et permet à l'unité d'exploitation 52 de la plateforme d'envoyer les commandes d'attitude à exécuter par la SCAO 20. La sortie 54 est reliée à l'entrée 37 du moyen de sélection 40 décrit à la figure 2 et lui envoie les commandes de sélection appropriées.

L'émetteur-récepteur 56 de télécommande et télémesure d'exploitation de la plateforme, en tant que récepteur de télécommandes d'exploitation du satellite est apte à recevoir des ordres émis depuis le sol dont dépendent les paramètres de commande du système de contrôle d'orbite et d'attitude 20.

Ainsi, la télécommande des paramètres de commande de la SCAO est maitrisée pas à pas par des opérateurs au sol.

La mémoire 59 est apte à stocker des programmes autonomes de séquençage de paramètres de commande à faire exécuter par le système de contrôle d'orbite et d'attitude 20 et à être lus par une l'unité d'exploitation 52 du satellite.

Ainsi, une télécommande autonome des paramètres de commande de la SCAO par programme automatique est réalisée.

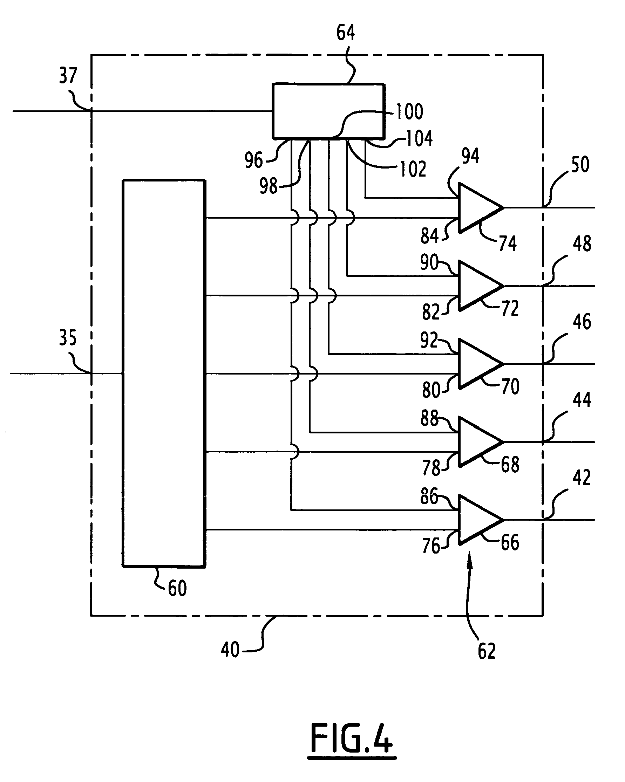

La figure 4 représente une vue détaillée de l'architecture du moyen de sélection 40.

Le moyen de sélection 40 comprend un diviseur radiofréquence (RF) à basse puissance 60 connecté par l'entrée 35 à l'émetteur 38 de rapatriement des données, un moyen de connexion-déconnexion RF 62 et un moyen de commande 64 du moyen de connexion-déconnexion 62.

Le diviseur radiofréquence (RF) à basse puissance 60 est apte à fonctionner pour des valeurs de puissance inférieures au watt.

Le moyen de connexion-déconnexion RF 62 est formé d'une batterie de cinq amplificateurs RF 66, 68, 70, 72, 74 avec un système de polarisation intégrée, chacun étant connecté par une entrée RF 76, 78, 80, 82, 84 à une sortie différente du diviseur de puissance RF 60.

Chaque amplificateur RF 66, 68, 70, 72, 74 est pourvu d'une entrée de commande respective 86, 88, 90, 92, 94 connectée respectivement à une sortie différente du moyen de commande 64 référencée respectivement 96, 98, 100, 102, 104.

Le moyen de commande 64 est apte à envoyer sur chacune des sorties 96, 98, 100, 102, 104 de manière sélective, un signal adapté pour effectuer une commutation de l'entrée 35 sur seulement une des sorties 42, 44, 46, 48, 50 au travers de la liaison RF de l'amplificateur correspondant 66, 68, 70, 72, 74, par exemple en mettant en circuit l'alimentation de l'amplificateur RF sélectionné et en mettant hors circuit les alimentations des quatre amplificateurs RF restants non sélectionnés.

Chaque amplificateur RF est ici de type à état solide, comporte des circuits à transistors, de préférence des MMICs (Microwave Monolithic Integrated Circuits) accordés en bande X.

La puissance de sortie de chaque amplificateur RF 66, 68, 70, 72, 74 est ici égale à 2 Watts.

Un telle architecture du moyen de sélection 40 permet de limiter les pertes de puissance RF en sortie et de fournir ainsi pour une sortie sélectionnée parmi les cinq sorties 42, 44, 46, 48, 50 la puissance RF de sortie la plus grande possible, permettant de maximiser la PIRE (puissance isotrope rayonné en émission ou EIRP en anglais) de sortie de l'antenne sélectionnée.

En d'autres termes, pour une exigence prédéterminée de PIRE associée à une quelconque des antennes de transmissions, une seule antenne étant sélectionnée à la fois, une telle architecture du moyen de sélection 40 diminue les pertes RF entre les amplificateurs et les antennes, et permet donc d'économiser de la puissance électrique à bord du satellite, de diminuer en conséquence la masse des batteries et des panneaux solaires, ce qui est crucial pour un satellite de petite taille.

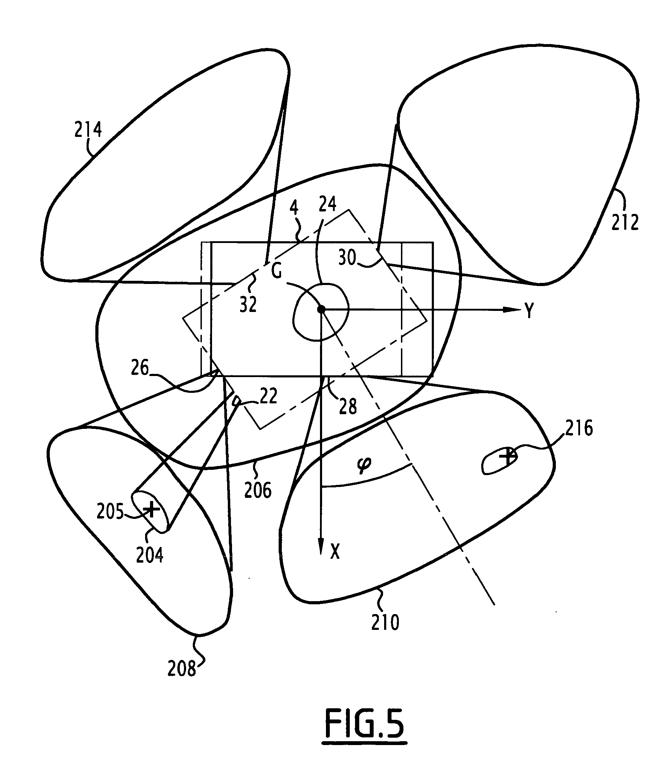

La figure 5 représente une vue dessus du satellite agile décrit à la figure 1 en situation opérationnelle dans laquelle il se trouve en orbite au-dessus de la Terre et des couvertures au sol des antennes de transmission 24, 26, 28, 30, 32 sont représentés grossièrement de manière projective.

Trois tracés du dessus du satellite 2 sont représentés sur la figure 5.

Le tracé en trait continu représente une première attitude de référence de la plateforme 4 du satellite situé à l'horizontale sur a figure 5 dans laquelle le panneau Terre 6 est normale à l'axe Nadir, avec un repère inertiel de référence lié au centre de gravité G du satellite et formé par les axes X, Y, axe Nadir.

Le tracé en trait fantôme de la plateforme 4 situé à l'horizontale de la figure correspond à une deuxième attitude du satellite dans laquelle la plateforme 4 a basculé selon un angle θ.

Le tracé en trait fantôme de la plateforme 4 inclinée par rapport à l'horizontale de la figure 5 correspond à une troisième attitude du satellite dans laquelle la plateforme 4 a tourné d'un angle ϕ autour d l'axe Nadir à partir de la deuxième attitude de la plateforme 4.

La troisième attitude de la plateforme 4 est l'attitude souhaitée par l'utilisateur pour pouvoir pointer le capteur d'observation 22 sur un théâtre d'opération 204 dans lequel une zone plus particulière 205 est observée.

Dans la configuration correspondant à la troisième attitude du satellite sont représentées les empreintes au sol des couvertures des antennes de transmission 24, 26, 28, 30, 32 de rapatriement des données.

Une première couverture 206 correspond à l'antenne 24 du panneau Terre 6 tandis que des empreintes 208, 210, 212, 214 correspondent respectivement aux antennes 26, 28, 30, 32.

En supposant que la station sol de rapatriement de données 216 soit située dans la couverture 210, alors le moyen de sélection d'antenne 40 sélectionne l'antenne 28 afin de retransmettre les données de télémesure recueillies au travers de la chaîne d'équipements 22, 36, 38, 35, 46 et 28.

Ainsi, il n'est pas nécessaire de changer l'attitude de la plateforme correspondant au positionnement en visée du capteur d'observation 22 pour transmettre les données à une station sol quelconque.

Ainsi, il est possible également de choisir une antenne de transmission non masquée par un ou des équipements montés sur un des panneaux. Cet avantage sera mis à profit par exemple dans le cas d'un masquage de l'antenne de transmission 26 du panneau de face Terre 6 par l'un des nombreux équipements implantés sur le panneau face Terre. Une antenne de transmission de panneau de mur n'étant pas affectée par le masquage se révèle alors plus appropriée pour assurer la transmission.

En variante, le contour 8 peut avoir une forme polygonale quelconque et les panneaux de mur peuvent être disposés par rapport au premier panneau selon une direction non orthogonale.

En variante, un ou plusieurs panneaux sont pourvus d'une ou plusieurs antennes de transmission supplémentaires, de redondance par rapport aux antennes de transmission 24, 26, 28, 30, 32, les antennes de redondance étant sélectionnables par le moyen de sélection 40. Ainsi la fiabilité et la robustesse à des pannes critiques pour la mission d'observation du satellite est augmentée.

En variante, la sélection dépend au choix d'un seul paramètre d'attitude, d'un seul paramètre orbital, ou d'une combinaison quelconque de l'ensemble de ces paramètres.

En variante, les antennes de transmission 24, 26, 28, 30, 32 sont en général de type passif et en particulier de type à cornet, à diélectrique et à hélice.

En variante, la bande de fréquence d'émission de l'ensemble des antennes de transmission 24, 26, 28, 30, 32 est comprise dans l'ensemble des bandes Ku et Ka.

En variante, le moyen de commande 64 est apte à envoyer sur chacune des sorties 96, 98, 100, 102, 104 de manière sélective, un signal adapté pour effectuer une commutation de l'entrée 35 sur au moins deux sorties 42, 44, 46, 48, 50 au travers de la liaison RF de l'amplificateur correspondant 66, 68, 70, 72, 74,

En variante, la commutation de l'entrée 35 sur seulement une des sorties 42, 44, 46, 48, 50 au travers de la liaison RF de l'amplificateur correspondant 66, 68, 70, 72, 74 est effectuée en modulant une tension de grille d'un transistor.

En variante, le diviseur radiofréquence (RF) 60 à basse puissance est remplacé par un commutateur RF à basse puissance, par exemple formé de diodes PIN (Positive Intrinsic Negative diodes), la commutation de l'entrée 35 sur l'une des sorties du commutateur RF à basse puissance étant effectuée de manière synchrone avec la commande de l'amplificateur RF sélectionné par le même signal de commande issu de la même sortie correspondante du moyen de commande 64. Par exemple, si l'amplificateur RF 66 est sélectionné par la commande issue de la sortie 96, la même commande fera commuter l'entrée 35 sur la sortie du commutateur RF reliée à l'entrée RF 76 de l'amplificateur RF 66.

## Revendications

1. Satellite agile comprenant une plateforme (4) formée d'un panneau de face Terre (6) et d'un ensemble de panneaux de mur (10, 12, 14, 16) disposés adjacents autour d'un bord circonférentiel (8) du premier panneau (6), un système de contrôle d'orbite et d'attitude (20) du satellite apte à commander au moins un paramètre de position et d'attitude (θ, ϕ) pris dans l'ensemble des paramètres de position orbitale par rapport à un repère fixe galiléen lié à la Terre et d'attitude du satellite par rapport à un repère inertiel de référence du satellite, un capteur d'observation (22) apte à fournir des données de télémesure et une mémoire (36) de stockage de données raccordée au capteur d'observation (22) et un émetteur (38) de rapatriement de données connecté à la mémoire (36), **caractérisé en ce qu'**il comprend au moins deux antennes (24, 26, 28, 30, 32) de transmission disposées sur un ou au moins deux panneaux parmi le panneau Terre (6) et les panneaux de mur (10, 12, 14, 16), chaque antenne (24, 26, 28, 30, 32) de transmission de données ayant un diagramme de rayonnement respectif fixe par rapport à la plateforme (4), et un moyen de sélection d'antenne (40) raccordé en entrée (35) à l'émetteur (38) de rapatriement des données et en sorties (42, 44, 46, 48, 50) à la ou chaque antenne de transmission (24, 26, 28, 30, 32), le moyen de sélection (40) étant apte à connecter de manière sélective l'entrée (35) à une sortie prise parmi les au moins deux sorties (42, 44, 46, 48, 50) connectées et **en ce que** la sélection dépend de l'au moins un paramètre de position et d'attitude (θ, ϕ).

2. Satellite agile selon la revendication 1, **caractérisé en ce que** la sélection dépend seulement d'au moins un paramètre d'attitude (θ, ϕ) du satellite (2).

3. Satellite agile selon l'une des revendications 1 à 2, **caractérisé en ce que** le système de contrôle d'orbite et d'attitude (20) est apte à commander un premier et un deuxième paramètres d'attitude, le premier paramètre d'attitude est un angle d'inclinaison (θ) par rapport à un premier axe inertiel de référence du satellite passant par le centre de gravité (G) du satellite, le deuxième paramètre d'attitude est un angle d'azimut (ϕ) de rotation autour du premier axe inertiel par rapport à un deuxième axe inertiel de référence azimutal prédéterminé orthogonal au premier axe, **en ce que** la sélection dépend d'au moins un angle pris parmi l'angle d'inclinaison (θ) et l'angle d'azimut (ϕ).

4. Satellite agile selon l'une des revendications 1 à 3, **caractérisé en ce qu'**il comprend un récepteur de télécommandes (56) d'exploitation du satellite émis depuis le sol, et **en ce que** les paramètres de commande du système de contrôle d'orbite et d'attitude (20) dépendent des ordres reçus.

5. Satellite agile selon l'une des revendications 1 à 4, **caractérisé en ce qu'**il comprend une mémoire (59) de programmes autonomes de paramètres de commande aptes à stocker une séquence de paramètres de commande du système de contrôle d'orbite et d'attitude et à être lus par une unité d'exploitation du satellite.

6. Satellite agile selon l'une quelconque des revendications 1 à 5, **caractérisé en ce que** chaque panneau compris parmi le panneau de face Terre (6) et les panneaux de mur (10, 12, 14, 16) comporte une antenne de transmission (24, 26, 28, 30, 32).

7. Satellite agile selon l'une quelconque des revendications 1 à 6, **caractérisé en ce que** l'angle de couverture stérique global des antennes de transmission (24, 26, 28, 30, 32) prises dans leur ensemble est sensiblement égal à 2π stéradian ce qui correspond à la demi-sphère dont l'axe central de symétrie est un axe passant par le centre de gravité (G) du satellite et normal au premier panneau (6).

8. Satellite agile selon l'une quelconque des revendications 1 à 7, **caractérisé en ce que** l'angle de couverture stérique de l'une quelconque des antennes de transmission (24, 26, 28, 30, 32) est au moins égal à 2π stéradians divisé par le nombre total d'antennes de transmission.

9. Satellite agile selon l'une quelconque des revendications 1 à 8, **caractérisé en ce que** l'angle de couverture planaire d'une quelconque des antennes de transmission (26, 28, 30, 32) associées respectivement aux panneaux de murs (10, 12, 14, 16) dans le plan d'extension du panneau de face Terre (6) est au moins égal à 2π radians divisé par le nombre total d'antennes de mur.

10. Satellite agile selon l'une des revendications 1 à 9, **caractérisé en ce que** les antennes de transmission (24, 26, 28, 30, 32) sont d'un type compris parmi les antennes à cornet, les antennes patch, passives, diélectriques et les antennes à hélice.

11. Satellite agile selon l'une quelconque des revendications 1 à 10, **caractérisé en ce que** le moyen de sélection (40) comprend un moyen de connexion-déconnexion RF (62) et un moyen de commande (64) du moyen de connexion-déconnexion, le moyen de connexion-déconnexion RF (62) comportant des amplificateurs radiofréquence (66, 68, 70, 72, 74) dont la sortie RF respective (40, 44, 46, 48, 50) est raccordée à l'antenne de transmission (24, 26, 28, 30, 32) respective, chaque entrée RF (76, 78, 80, 82, 84) d'amplificateur étant connectée à une entrée (35) du moyen de sélection au travers d'un diviseur de basse puissance RF (60) ou d'un commutateur électronique RF de basse puissance, chaque amplificateur (66, 68, 70, 72, 74) ayant une entrée (86, 88, 90, 92, 94) de commande de l'état RF passant ou non passant de l'amplificateur (66, 68, 70, 72, 74).

12. Satellite agile selon la revendication 11, **caractérisé en ce que** chaque amplificateur (66, 68, 70, 72, 74) comporte un système de polarisation intégré et le moyen de commande (64) est apte à mettre en circuit l'alimentation d'un amplificateur sélectionné et à mettre hors circuit les alimentations des amplificateurs restants non sélectionnés.

13. Satellite agile selon l'une des revendications 1 à 12, **caractérisé en ce que** la bande de fréquence d'émission de l'ensemble des antennes de transmission (24, 26, 28, 30, 32) est comprise dans l'ensemble des bandes X, Ku et Ka.

14. Procédé de rapatriement de données d'observation d'un satellite agile défini selon l'une des revendications 1 à 13, **caractérisé en ce que**, pendant l'établissement d'un positionnement et d'une attitude de la plateforme correspondant à une visée du capteur d'observation sur une zone donnée de la surface du globe terrestre, un emplacement d'une station étant connue, l'antenne de transmission destinée à transmettre le flux de données généré est sélectionnée de telle sorte que son diagramme de rayonnement couvre la station sol.

15. Procédé selon la revendication 14 **caractérisé en ce qu'**une seule antenne de transmission est sélectionnée à la fois.

## Claims

1. Agile satellite comprising a platform (4) made up of an earth face panel (6) and a set of wall panels (10, 12, 14, 16) disposed adjacently around a circumferential edge (8) of the first panel (6), a system (20) for controlling the attitude and orbit of the satellite configured to control at least one position and attitude parameter (θ, ϕ) selected from all the orbital position parameters relative to a fixed Galilean locating point linked to the earth and satellite attitude parameters relative to a reference inertial locating point of the satellite, an observation sensor (22) configured to provide telemetric data and a memory (36) connected to the observation sensor (22) for storing data, and a transmitter (38) connected to the memory (36) for repatriating data, **characterised in that** it comprises at least two transmitting antennas (24, 26, 28, 30, 32) disposed on one or at least two panels selected from the earth panel (6) and the wall panels (10, 12, 14, 16), each data transmitting antenna (24, 26, 28, 30, 32) having a respective radiation diagram which is fixed relative to the platform (4), and an antenna selection means (40) connected to the input (35) of the data repatriation transmitter (38) and to outputs (42, 44, 46, 48, 50) on the or each transmitting antenna (24, 26, 28, 30, 32), the selection means (40) being configured to connect the input (35) selectively to an output selected from the at least two connected outputs (42, 44, 46, 48, 50), and the selection depends on at least one position and attitude parameter (θ, ϕ).

2. Agile satellites as claimed in claim 1, **characterised in that** the selection depends solely on at least one attitude parameter (θ, ϕ) of the satellite (2).

3. Agile satellite as claimed in one of claims 1 to 2, **characterised in that** the attitude and orbit control system (20) is configured to control a first and a second attitude parameter, the first attitude parameter being an angle of inclination (θ) with respect to a first inertial reference axis of the satellite passing through the centre of gravity (G) of the satellite, the second attitude parameter being an azimuth angle (ϕ) of rotation about the first inertial axis relative to a second predetermined azimuth inertial reference axis orthogonal to the first axis, and the selection depends on at least one angle selected from the angle of inclination (θ) and the angle of azimuth (ϕ).

4. Agile satellite as claimed in one of claims 1 to 3, **characterised in that** it has a receiver (56) for receiving remote controls transmitted from the ground for operating the satellite, and the control parameters of the attitude and orbit control system (20) depend on the commands received.

5. Agile satellite as claimed in one of claims 1 to 4, **characterised in that** it has a memory (59) for autonomous control parameter programmes configured to store a sequence of control parameters of the attitude and orbit control system and be read by a satellite operating unit.

6. Agile satellite as claimed in any one of claims 1 to 5, **characterised in that** each panel disposed between the earth face panel (6) and the wall panels (10, 12, 14, 16) has a transmitting antenna (24, 26, 28, 30, 32).

7. Agile satellite as claimed in any one of claims 1 to 6, **characterised in that** the global steric angle of coverage of the transmitting antennas (24, 26, 28, 30, 32) taken as a whole is essentially equal to 2n steradians, which corresponds to the half-sphere whose central axis of symmetry is an axis passing through the centre of gravity (G) of the satellite and normal to the first panel (6).

8. Agile satellite as claimed in any one of claims 1 to 7, **characterised in that** the steric angle of coverage of any one of the transmitting antennas (24, 26, 28, 30, 32) is at least equal to 2π steradians divided by the total number of transmitting antennas.

9. Agile satellite as claimed in any one of claims 1 to 8, **characterised in that** the planar angle of coverage of any one of the transmitting antennas (26, 28, 30, 32) respectively associated with the wall panels (10, 12, 14, 16) in the plane of extension of the earth face panel (6) is at least equal to 2π radians divided by the total number of wall antennas.

10. Agile satellite as claimed in any one of claims 1 to 9, **characterised in that** the transmitting antennas (24, 26, 28, 30, 32) are of a type selected from horn antennas, patch antennas, passive antennas, dielectric antennas and helix antennas.

11. Agile satellite as claimed in any one of claims 1 to 10, **characterised in that** the selection means (40) has an RF connection-disconnection means (62) and a control means (64) for the connection-disconnection means, the RF connection-disconnection means (62) having radio frequency amplifiers (66, 68, 70, 72, 74), the respective RF output (40, 44, 46, 48, 50) of which is connected to the respective transmitting antenna (24, 26, 28, 30, 32), each amplifier RF input (76, 78, 80, 82, 84) being connected to an input (35) of the selection means via a low-power RF divider (60) or a low-power RF electronic switch, each amplifier (66, 68, 70, 72, 74) having an input (86, 88, 90, 92, 94) for controlling the RF state passing or not passing through the amplifier (66, 68, 70, 72, 74).

12. Agile satellite as claimed in claim 11, **characterised in that** each amplifier (66, 68, 70, 72, 74) has an integrated polarisation system and the control means (64) is configured to switch on the power supply of a selected amplifier and switch off the power supplies of amplifiers which remain unselected.

13. Agile satellite as claimed in one of claims 1 to 12, **characterised in that** the transmission frequency band of all of the transmitting antennas (24, 26, 28, 30, 32) is within the set of bands X, Ku and Ka.

14. Method of repatriating observation data from an agile satellite as defined in one of claims 1 to 13, **characterised in that**, during the process of ascertaining a position and an attitude of the platform corresponding to a sight of the observation sensor on a given zone of the surface of the terrestrial globe, a location of a station being known, the transmitting antenna designated to transmit the generated data stream is selected so that its radiation diagram covers the ground station.

15. Method as claimed in claim 14, **characterised in that** only a single transmitting antenna is selected at any one time.

## Patentansprüche

1. Agiler Satellit, umfassend eine Plattform (4), die von einer Erdseite-Platte (6) und von einer Einheit von Wandplatten (10, 12, 14, 16) gebildet ist, die angrenzend um einen Umfangsrand (8) der ersten Platte (6) herum angeordnet sind, ein System (20) zur Orbit- und Lageregelung des Satelliten, das mindestens einen Positions- und Lageparameter (θ, ϕ) steuern kann, der aus der Gesamtheit der Parameter der Orbitalposition bezüglich eines mit der Erde verbundenen festen galileischen Bezugs und der Lage des Satelliten bezüglich eines Trägheitsbezugs des Satelliten genommen ist, einen Beobachtungsfühler (22), der Fernmessdaten liefern kann, und einen mit dem Beobachtungsfühler (22) verbundenen Speicher (36) zur Speicherung von Daten und einen mit dem Speicher (36) verbundenen Sender (38) zur Rückführung von Daten, **dadurch gekennzeichnet, dass** er mindestens zwei Übertragungsantennen (24, 26, 28,30, 32), die auf einer oder mindestens zwei Platten aus der Erd-Platte (6) und den Wandplatten (10, 12, 14, 16) angeordnet sind, wobei jede Datenübertragungsantenne (24, 26, 28, 30, 32) ein jeweiliges, bezüglich der Plattform (4) feststehendes Strahlungsdiagramm besitzt, und ein Mittel (40) zur Antennenwahl umfasst, das am Eingang (35) mit dem Sender (38) zur Rückführung der Daten und an den Ausgängen (42, 44, 46, 48, 50) mit der oder jeder Übertragungsantenne (24, 26, 28, 30, 32) verbunden ist, wobei das Wählmittel (40) den Eingang (35) selektiv mit einem Ausgang verbinden kann, der aus den mindestens zwei verbundenen Ausgängen (42, 44, 46, 48, 50) genommen ist, und dass die Wahl von dem mindestens einen Positions- und Lageparameter (θ, ϕ) abhängt.

2. Agiler Satellit nach Anspruch 1, **dadurch gekennzeichnet, dass** die Wahl nur von mindestens einem Lageparameter (θ, ϕ) des Satelliten (2) abhängt.

3. Agiler Satellit nach einem der Ansprüche 1 bis 2, **dadurch gekennzeichnet, dass** das Orbit- und Lageregelungssystem (20) einen ersten und einen zweiten Lageparameter steuern kann, der erste Lageparameter ein Neigungswinkel (θ) bezüglich einer ersten Bezugsträgheitsachse des Satelliten ist, die durch den Schwerpunkt (G) des Satelliten verläuft, und der zweite Lageparameter ein Azimutwinkel (ϕ) der Rotation um die erste Trägheitsachse bezüglich einer zweiten vorbestimmten azimutalen Bezugsträgheitsachse ist, die zur ersten Achse senkrecht ist, dass die Wahl von mindestens einem Winkel abhängt, der aus dem Neigungswinkel (θ) und dem Azimutwinkel (ϕ) genommen ist.

4. Agiler Satellit nach einem de Ansprüche 1 bis 3, **dadurch gekennzeichnet, dass** er einen Empfänger (56) für vom Boden aus gesendete Fernsteuerungen zum Betrieb des Satelliten umfasst und dass die Steuerparameter des Orbit- und Lageregelungssystems (20) von den empfangenen Befehlen abhängen.

5. Agiler Satellit nach einem der Ansprüche 1 bis 4, **dadurch gekennzeichnet, dass** er einen Speicher (59) für autonome Programme von Steuerparametern umfasst, die eine Sequenz von Parametern zur Steuerung des Orbit- und Lageregelungssystems speichern und von einer Einheit zum Betrieb des Satelliten gelesen werden können.

6. Agiler Satellit nach einem der Ansprüche 1 bis 5, **dadurch gekennzeichnet, dass** jede Platte, die aus der Erdseite-Platte (6) und den Wandplatten (10, 12, 14, 16) genommen ist, eine Übertragungsantenne (24, 26, 28, 30, 32) umfasst.

7. Agiler Satellit nach einem der Ansprüche 1 bis 6, **dadurch gekennzeichnet, dass** der sterische Gesamtbedeckungswinkel der Übertragungsantennen (24, 26, 28, 30, 32), in ihrer Gesamtheit genommen, im Wesentlichen gleich 2π Steradiant ist, was der Halbkugel entspricht, deren Symmetrie-Mittelachse eine Achse ist, die durch den Schwerpunkt (G) des Satelliten verläuft und zur ersten Platte (6) normal ist.

8. Agiler Satellit nach einem der Ansprüche 1 bis 7, **dadurch gekennzeichnet, dass** der sterische Bedeckungswinkel einer beliebigen der Übertragungsantennen (24, 26, 28, 30, 32) mindestens gleich 2π Steradiant, geteilt durch die Gesamtzahl der Übertragungsantennen, ist.

9. Agiler Satellit nach einem der Ansprüche 1 bis 8, **dadurch gekennzeichnet, dass** der planare Bedeckungswinkel einer beliebigen der den Wandplatten (10, 12, 14, 16) jeweils zugeordneten Übertragungsantennen (26, 28, 30, 32) in der Ausdehnungsebene der Erdseite-Platte (6) mindestens gleich 2π Radiant, geteilt durch die Gesamtzahl der Wandantennen, ist.

10. Agiler Satellit nach einem der Ansprüche 1 bis 9, **dadurch gekennzeichnet, dass** die Übertragungsantennen (24, 26, 28,30, 32) von einem Typ sind, der aus den Horn-, Patch-, passiven, dielektrischen und Spiralantennen genommen ist.

11. Agiler Satellit nach einem der Ansprüche 1 bis 10, **dadurch gekennzeichnet, dass** das Wählmittel (40) ein Funkfrequenz-Verbindungs- und Trennmittel (62) und ein Mittel (64) zur Steuerung des Verbindungs- und Trennmittels umfasst, wobei das Funkfrequenz-Verbindungs- und Trennmittel (62) Funkfrequenz-Verstärker (66, 68, 70, 72, 74) umfasst, deren jeweiliger Funkfrequenz-Ausgang (40, 44, 46, 48, 50) mit der jeweiligen Übertragungsantenne (24, 26, 28, 30, 32) verbunden ist, wobei jeder Funkfrequenz-Verstärkereingang (76, 78, 80, 82, 84) mit einem Eingang (35) des Wählmittels über einen Funkfrequenz-Niederleistungsteiler (60) oder einen elektronischen Funkfrequenz-Niederleistungs-Schalter verbunden ist, wobei jeder Verstärker (66, 68, 70, 72, 74) einen Eingang (86, 88, 90, 92, 94) zur Steuerung des leitenden oder nichtleitenden Funkfrequenz-Zustands des Verstärkers (66, 68, 70, 72, 74) aufweist.

12. Agiler Satellit nach Anspruch 11, **dadurch gekennzeichnet, dass** jeder Verstärker (66, 68, 70, 72, 74) ein integriertes Polarisierungssystem umfasst und das Steuermittel (64) die Versorgung eines gewählten Verstärkers einschalten und die Versorgungen der übrigen, nicht gewählten Verstärker ausschalten kann.

13. Agiler Satellit nach einem der Ansprüche 1 bis 12, **dadurch gekennzeichnet, dass** das Sendefrequenzband der Gesamtheit der Übertragungsantennen (24, 26, 28, 30, 32) in der Gesamtheit der Bänder X, Ku und Ka enthalten ist.

14. Verfahren zur Rückführung von Beobachtungsdaten eines gemäß den Ansprüchen 1 bis 13 definierten beweglichen Satelliten, **dadurch gekennzeichnet, dass** während der Erstellung einer Positionierung und einer Lage der Plattform, die einer Einstellung des Übertragungsfühlers auf eine gegebene Zone der Oberfläche der Erdkugel entspricht, wobei ein Standort einer Station bekannt ist, die zur Übertragung des erzeugten Datenflusses bestimmte Übertragungsantenne so ausgewählt wird, dass ihr Strahlungsdiagramm die Bodenstation bedeckt.

15. Verfahren nach Anspruch 14, **dadurch gekennzeichnet, dass** nur eine Übertragungsantenne gleichzeitig ausgewählt wird.
